# EUROPÄISCHE PATENTSCHRIFT

(11) **EP 0 486 887 B1**
(45) Veröffentlichungstag und Bekanntmachung des Hinweises auf die Patenterteilung: **01.03.1995**
(21) Anmeldenummer: 91118968.6
(22) Anmeldetag: 07.11.1991
(51) Int. Cl.: A01D 45/02

(54) **Pflückvorsatz für ein Erntegerät**
Picking attachment for a harvester
Appareil à cueillir pour une moissonneuse

(30) Priorität: 17.11.1990 DE 4036717
(43) Veröffentlichungstag der Anmeldung: 27.05.1992
(73) Patentinhaber: Kalverkamp, Klemens, D-49401 Damme (DE)
(72) Erfinder: Kalverkamp, Klemens, D-49401 Damme (DE)
(74) Vertreter: Habbel, Hans-Georg, Dipl.-Ing.

(56) Entgegenhaltungen:
- EP-A- 0 355 441
- DE-A- 3 612 224
- DE-A- 3 726 967
- DE-A- 3 808 324
- DE-A- 3 930 777

## Beschreibung

Die Erfindung bezieht sich auf einen Pflückvorsatz für ein Erntegerät gemäß dem Oberbegriff des Hauptanspruches.

Es sind Erntegeräte bekannt, die mit nur einem Einzugsrotor ausgerüstet sind, wobei dem Einzugsrotor eine Teilummantelung zugeordnet ist, die als Gegenhalter für die Wirkungsweise der auf dem Einzugsrotor angeordneten Arbeitskanten dient.

Obgleich eine solche, nur mit einem einzigen Einzugsrotor arbeitende Einrichtung energietechnisch wesentliche Vorteile aufweist, ist es auch aus der gattungsbildenden DE-39 30 777 A1 bekanntgeworden, als Teilummantelung eine Gegenwalze einzusetzen. Da diese Gegenwalze gegenüber den mit einem Einzugsrotor arbeitenden Einrichtungen einen zusätzlichen Energieaufwand erfordert, ist es von großer Bedeutung dafür Sorge zu tragen, daß dieser Energieaufwand möglichst niedrig gehalten wird.

Bei der bekannten, mit zwei sich drehenden Einzugsvorrichtungen arbeitenden Anordnung tritt weiterhin der Nachteil ein, daß die von der Maschine geschnittenen Stengel in einem relativ schmalen Schwad abgelegt werden, so daß ein Verrotten der Stengel erschwert und leichtes Unterpflügen nicht mehr möglich ist.

Der Erfindung liegt die Aufgabe zugrunde, bei einem Pflückvorsatz, der mit zwei zusammenwirkenden, drehenden Walzen arbeitet, dafür Sorge zu tragen, daß der Energieaufwand möglichst niedrig ist und eine breitflächige Verteilung der durch die Zerkleinerungsmesser geschnittenen Stengelabschnitte erfolgt.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird gemäß der Erfindung vorgeschlagen, daß die Zerkleinerungsmesser so tief im Bereich des Einzugsrotors angeordnet werden, daß sie mit der Gegenwalze nicht mehr in Kontakt kommen und gleichzeitig bewirken, daß die durch Einzugsrotor und Gegenwalze nach unten gezogenen und nach Durchlaufen der Messer zerkleinerten Stengelstückchen breitflächig verteilt werden. Der Abwurfwinkel ist also nicht mehr im wesentlichen vertikal ausgerichtet, sondern schräg zur Seite. Dadurch, daß die Zerkleinerungsmesser nicht noch in die Gegenwalze eingreifen, wird der hier durch Anhängen der Fasern zwangsläufig bedingte Widerstand vermieden.

Um ein Wickeln der Stengel im Bereich der Gegenwalze zu vermeiden, wird gemäß der Erfindung u. a. auch vorgeschlagen, daß Gegenmesser vorgesehen sind, die mit den Flügeln der Gegenwalze zusammenwirken.

Das breite Auswerfen der geschnittenen Stengel wird auch durch eine die Gegenwalze nach unten hin abdeckende Abdeckwanne verbessert, die verhindert, daß Stengelteilchen oder Stengel einfach vertikal nach unten hin durchfallen können.

Gemäß der Erfindung ist es auch möglich, nur mit einer Einzugswalze und einer Gegenwalze ohne den Einsatz der Zerkleinerungsmesser zu arbeiten. Hierdurch ist es möglich, daß die Einzugswalze nur mit einfachen Arbeitskanten ohne Schlitze versehen wird und daß die aufwendige Messergestaltung wegfallen kann. Durch das Zusammenwirken der Arbeitskanten der Einzugswalze und der Flügel der Gegenwalze kann ein Quetschen und/oder Einschneiden und/oder Durchschneiden der Stengel der zu erntenden Körnerfrüchte erreicht werden.

Schließlich ist es gemäß der Erfindung auch zusätzlich zu den in den Zeichnungen dargestellten Ausführungsformen möglich, im Bereich des Einzugsrotors und der Gegenwalze Messer vorzusehen, die beispielsweise als angetriebene Scheibenmesser oder als gewölbte Schneidmesser ausgebildet sind und die bewirken, daß der Kraftaufwand verringert und der Staucheffekt beim Beginn des Einzugs der Stengel vermieden wird. Solche Messer sind aus der DE-A 38 28 358 bekannt.

Ausführungsbeispiele der Erfindung werden nachfolgend anhand der Zeichnungen erläutert. Die Zeichnungen zeigen dabei in
- Fig. 1: in einer geschnittenen Darstellungsweise eine erste Ausführungsform von Einzugsrotor und Gegenwalze, in
- Fig. 2: in einer geschnittenen Darstellungsweise eine zweite Ausführungsform von Einzugsrotor und Gegenwalze, in
- Fig. 3: eine abgeänderte Ausführungsform, wobei insbesondere die Messerstellung geändert wurde, in
- Fig. 4: eine abgeänderte Ausführungsform mit eingezeichneten Hüllkreisen für den Einzugsrotor und die Gegenwalze und in
- Fig. 5: eine gegenüber Fig. 4 abgeänderte Ausführungsform.

In den Zeichnungen ist geschnitten der Teil eines Pflückvorsatzes 1 dargestellt, wobei dieser Pflückvorsatz einen Einzugsrotor 2 aufweist, der umlaufend angetrieben wird und mit Arbeitskanten 3, 4, 5 und 6 ausgerüstet ist. Diese Arbeitskanten stehen über den Umfang des Einzugsrotors 2 vor, und in den vorstehenden Teilen der Arbeitskanten 3 bis 6 sind Schlitze 7 angeordnet, in die Zerkleinerungsmesser 8 hineinragen. Die Zerkleinerungsmesser 8 werden von einem Rahmen 20 getragen, wobei dieser Rahmen außerdem einen Pflückspalt 21 definiert, dessen Weite durch Pflückplatten 22 und 23 regelbar ist. Die in der Zeichnung nicht dargestellten Maisstengel werden von Mitnehmerfingern 24 und 25, die von Einzugsketten getragen werden, transportiert.

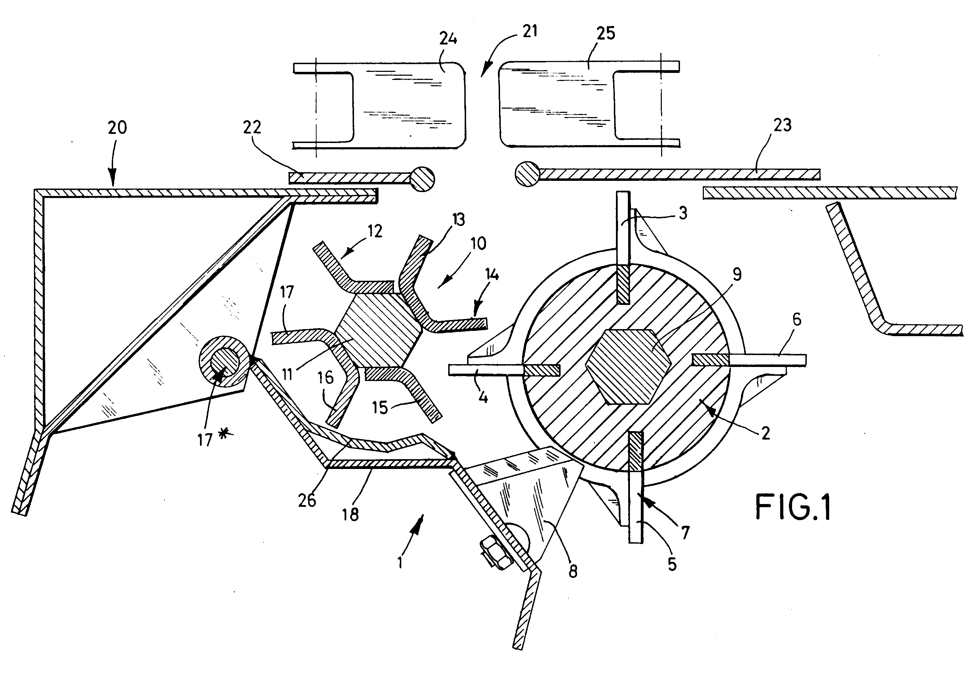

An dem Rahmen 20 ist bei dem dargestellten Ausführungsbeispiel gemäß Fig. 1 eine Abdeckwanne 18 vorgesehen, die an ihrem unteren Ende die Zerkleinerungsmesser 8 trägt und die an ihrem anderen Ende bei 17* schwenkbar vom Rahmen 20 getragen wird. Hierdurch ist es möglich, die Zerkleinerungsmesser aus dem Arbeitsbereich des Einzugsrotors 2 auszuklappen.

Dem Einzugsrotor 2 zugeordnet ist eine Gegenwalze 10, die aus einer der Tragwelle 9 des Einzugsrotors 2 vergleichbaren Tragwelle 11 besteht, auf der Flügel 12, 14, 15, 16 und 17 befestigt sind. Diese Flügel bestehen bei dem dargestellten Ausführungsbeispiel aus V- und/oder L- und/oder U-förmigen Bauteilen. Der Einzugsrotor 2 und die Gegenwalze 10 werden beide angetrieben und sind über einen entsprechenden Verzahnungstrieb antriebsmäßig so miteinander verbunden, daß sie stets die gleiche Stellung zueinander einnehmen, wobei die Gegenwalze 10 schneller umläuft als der Einzugsrotor 2.

Die in Fig. 1 dargestellte Abdeckwanne 18 trägt auf ihrer Innenseite ein Abdeckblech 26, das sich dem äußeren Hüllkreis der Gegenwalze 10 etwa anpaßt, so daß die von den Mitnehmerfingern 24 und 25 zugeführten Maisstengel nach Ergreifen durch die Arbeitskanten des Einzugsrotors 2 zusammenwirken und mit den Flügeln der Gegenwalze 10 nach unten zu den Zerkleinerungsmessern 8 geführt werden. Aufgrund der Umlaufgeschwindigkeit werden die von den Zerkleinerungsmessern 8 zerkleinerten Stengelstückchen dann relativ breit abgeworfen, so daß sich unterhalb des Bereiches zwischen dem Einzugsrotor 2 und der Gegenwalze 10 kein Schwad bildet.

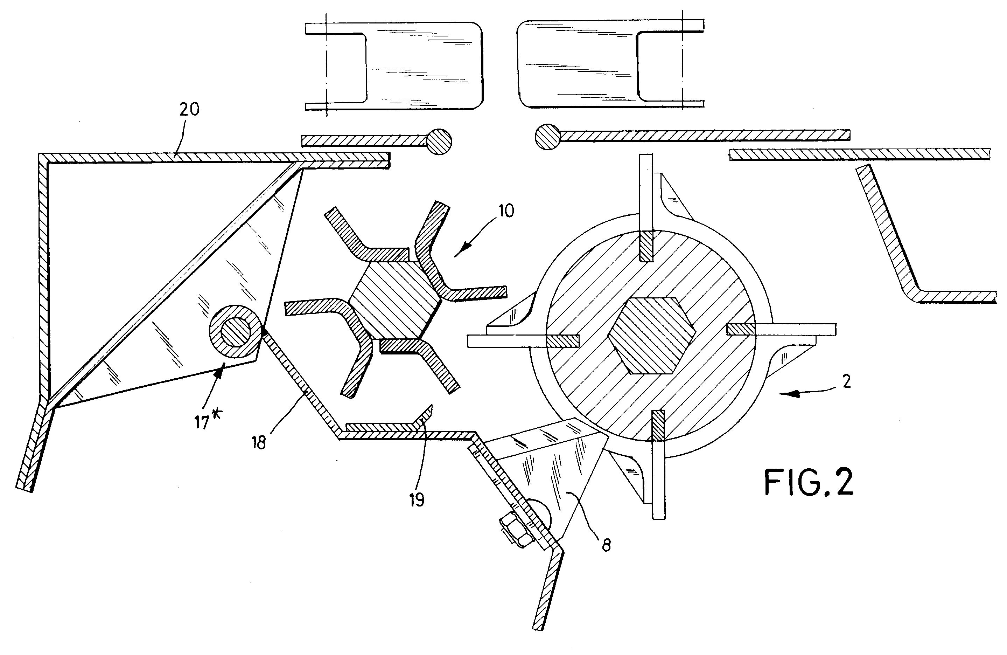

Bei der Anordnung gemäß Fig. 2 ist die Abdeckwanne 18 zusätzlich mit einem Gegenmesser 19 ausgerüstet, das mit den Enden der Gegenwalze 10 so zusammenwirkt, daß ein Wickeln von Stengeln oder sonstigem Unkraut im Bereich der Gegenwalze nicht möglich ist.

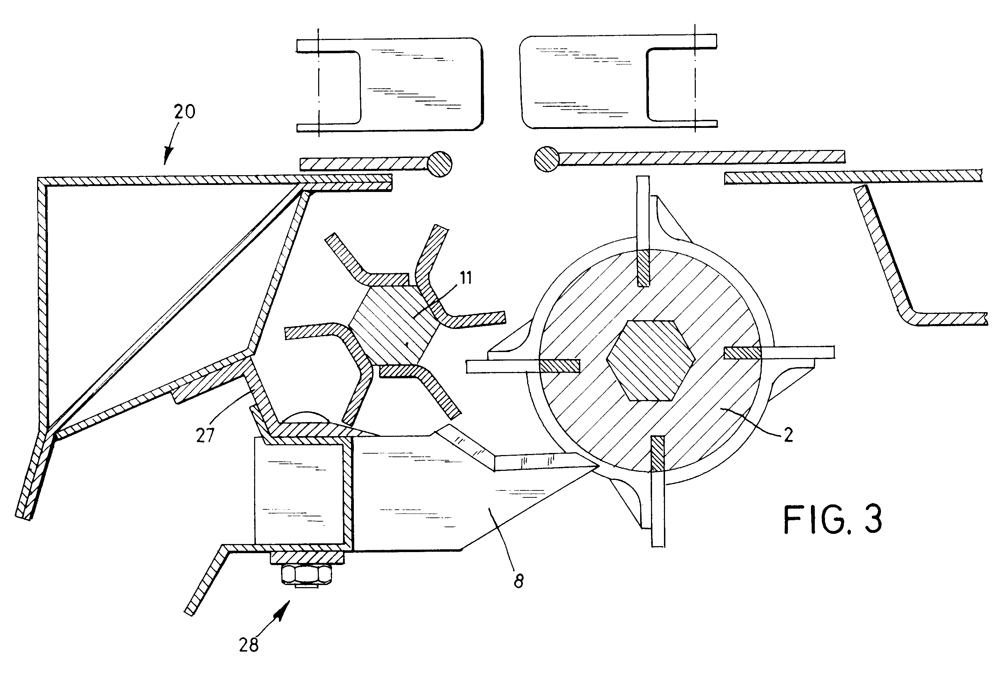

Bei der Ausführungsform gemäß Fig. 3 werden die Zerkleinerungsmesser 8 nicht mehr von einer Abdeckwanne getragen, sondern sind relativ unmittelbar an dem Rahmen 20 angeordnet, und zwar bei dem dargestellten Ausführungsbeispiel unter Zwischenschaltung eines Trägers 27. Dieser Träger 27 trägt die Messer unter Zwischenschaltung von Klemmschrauben 28, so daß nach Lösen der Klemmschrauben 28 die Messer verschiebbar und damit einstellbar sind. Bei dem in Fig. 3 dargestellten Ausführungsbeispiel sind die von der Tragwelle 11 getragenen Flügel an ihren Enden stumpf ausgebildet und wirken intermittierend mit den Arbeitskanten des Einzugsrotors 2 zusammen.

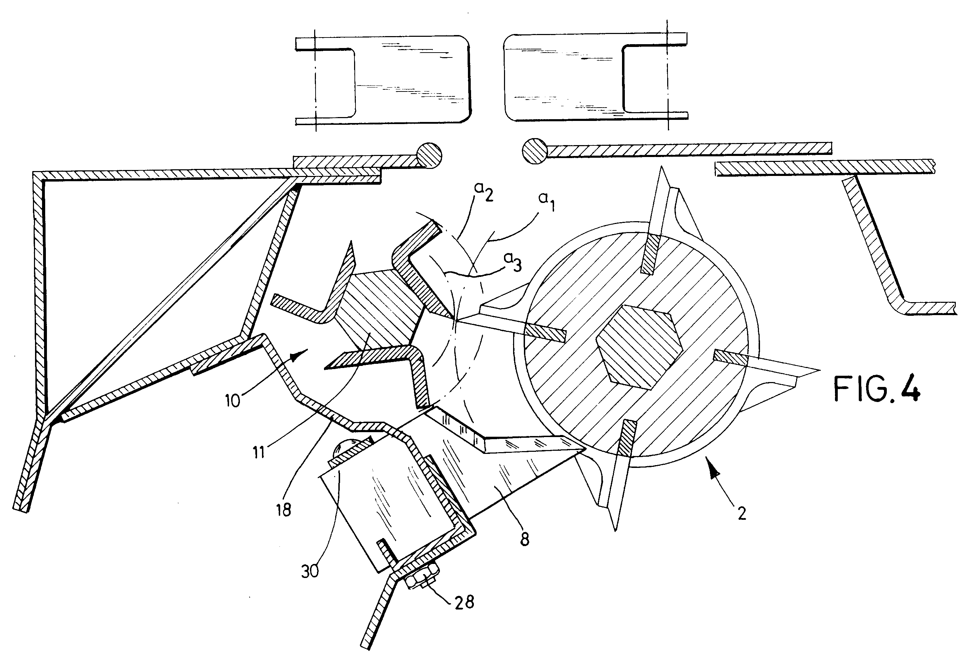

Bei dem in Fig. 4 dargestellten Ausführungsbeispiel sind die Flügel als L-förmige Bauteile ausgebildet, wobei ein Schenkel dieses L's angespitzt ausgebildet ist und kürzer über den Umfang der Tragwelle 11 vorsteht als der andere Schenkel. Die hierdurch bedingten Hüllkreise sind in Fig. 4 eingezeichnet und der Hüllkreis des kurzen, angespitzten Schenkels der Flügel der Gegenwalze 10 sind mit a₃ und der Hüllkreis der längeren Schenkel der Gegenwalze 10 sind mit a₂ eingezeichnet. Zusätzlich ist in Fig. 4 der Hüllkreis des Einzugsrotors 2 ebenfalls eingezeichnet und trägt die Bezeichnung a₁. Aus Fig. 4 wird ersichtlich, daß beim Umlauf von Gegenwalze 10 und Einzugsrotor 2 die Spitzen der Arbeitskanten mit den Spitzen der Flügel nicht in Berührung kommen, aber sich so gegenüberstehen, daß ein kleiner Zwischenraum zwischen den Spitzen gebildet ist, wobei in diesem Zwischenraum der zu erntende Stengel zerquetscht oder zerschnitten wird. Das endgültige Zerschneiden der Stengel erfolgt dann durch die relativ tief unter der Gegenwalze 10 angeordneten Messer 8.

Auch bei der Darstellung gemäß Fig. 4 ist eine andere Befestigungsart der Messer gegenüber den Fig. 1 und 2 gewählt, nämlich die Messer befinden sich zwar an einer Abdeckwanne 18, aber sind verstellbar dadurch gelagert, daß sie von einem Druckträger 30 beaufschlagt werden, der durch eine Schraube 28 festgelegt ist. Auch hier kann durch Lösen der Schraube 28 das Messer 8 eingestellt werden.

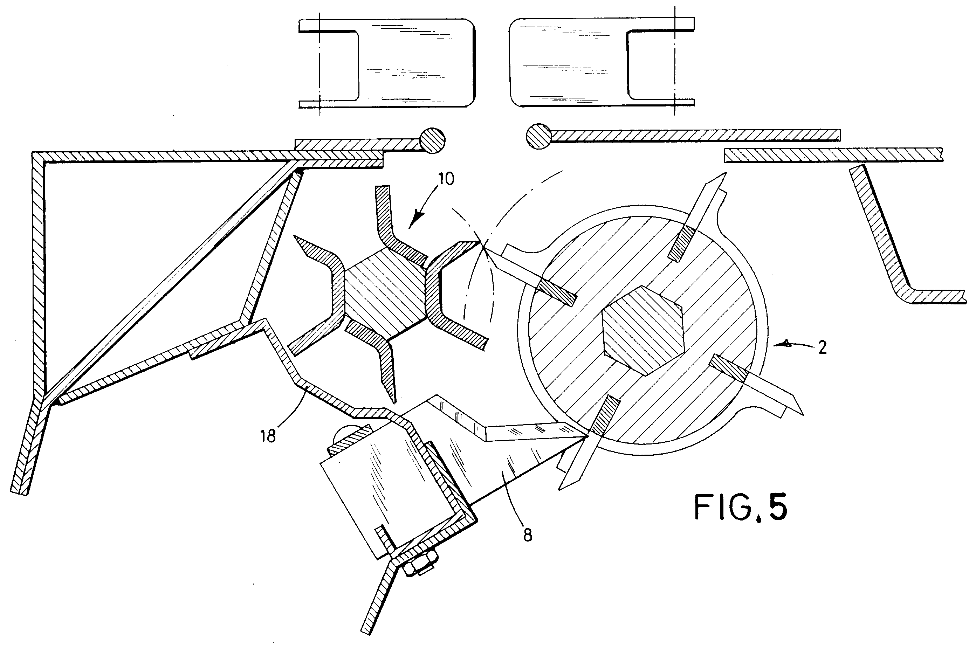

Bei der in Fig. 5 dargestellten Ausführungsform sind die beiden zusammenwirkenden Arbeitswalzen, der Einzugsrotor 2 und die Gegenwalze 10 so eingestellt, daß sich nicht die Spitzen von Flügeln und Arbeitskanten gegenüberstehen, sondern die Spitzen der Arbeitskanten bewegen sich an der Innenseite der angespitzten Flügelschenkel entlang, wodurch durch diesen Bewegungsablauf ein Wickeln von Pflanzenmaterial im Bereich der Gegenwalze vermieden wird und gleichzeitig ein Einschneiden und Zerkleinern der Stengel bewirkt wird.

Durch die im vorausgehenden beschriebenen Anordnungen wird erreicht, daß der Abwurf der zerkleinerten Stengel stärker zur Seite und sehr breitflächig erfolgt, so daß ein leichtes Verrotten und Unterpflügen möglich ist. Die Messer stehen so tief, daß sie nicht mit der Gegenwalze in Kontakt kommen, so daß kein Einziehen von Pflanzenresten in die sonst erforderlichen Schlitze der Pflüge möglich ist. Hierdurch wird jede Reibung und Verschleiß vermieden.

Während im voraufgehenden, insbesondere anhand der Figuren, verschiedene Ausführungsformen beschrieben und erläutert wurden, ist es im Rahmen der Erfindung liegend, daß die einzelnen Teilmerkmale der Ausführungsformen miteinander vermischt und unterschiedlich kombiniert werden können.

Besonders wesentlich ist die Ausführungsform der Erfindung, bei welcher auf die Zerkleinerungsmesser verzichtet wird, so daß allein durch das Zusammenwirken von Einzugswalze und Gegenwalze ein Zerkleinern der zu erntenden Stengel herbeigeführt wird.

## Patentansprüche

1. Pflückvorsatz (1) für ein Erntegerät zum Ernten von Körnerfrüchten, z. B. Mais od. dgl., mit einem je Pflanzenreihe vorgesehenen Einzugsrotor (2), der auf seinem Umfang mit Arbeitskanten (3, 4, 5, 6) ausgerüstet ist, die Schlitze (7) aufweisen, in die von der Maschine getragene Zerkleinerungsmesser (8) eingreifen und der mit einer mit Flügeln (12, 13, 14, 15, 16, 17) ausgerüsteten Gegenwalze (10) als Gegenhalter für den Einzugsrotor (2) zusammenarbeitet, dadurch gekennzeichnet, daß die Zerkleinerungsmesser (8) ausschließlich mit den Schlitzen (7) des Einzugsrotors (2) zusammenarbeiten.

2. Pflückvorsatz nach Anspruch 1, dadurch gekennzeichnet, daß der Bereich unterhalb der Gegenwalze (10) nach unten hin geschlossen ist.

3. Pflückvorsatz nach Anspruch 1 oder 2, dadurch gekennzeichnet, daß die Zerkleinerungsmesser (8) schwenkbar (bei 17*) gelagert sind.

4. Pflückvorsatz nach einem oder mehreren der vorhergehenden Ansprüche, dadurch gekennzeichnet, daß die Flügel (12 - 17) der Gegenwalze (10) als V- und/oder L- und/oder U-Bügel ausgebildet sind.

5. Pflückvorsatz nach einem oder mehreren der vorhergehenden Ansprüche, dadurch gekennzeichnet, daß die Enden wenigstens einiger Flügel (12 - 17) und/oder wenigstens einiger Arbeitskanten (3 - 6) spitz zulaufend ausgebildet sind.

6. Pflückvorsatz nach einem oder mehreren der vorhergehenden Ansprüche, dadurch gekennzeichnet, daß bei ihrem Umlauf die spitz zulaufend ausgebildeten Enden der Arbeitskanten (3 - 6) den spitz zulaufenden Enden der Flügel (12 - 17) gegenüberstehen und den zwischen ihnen befindlichen Halm quetschen und/oder einschneiden und/oder durchschneiden (Fig. 4).

7. Pflückvorsatz nach einem oder mehreren der vorhergehenden Ansprüche, gekennzeichnet durch die Kombination von spitz zulaufend ausgebildeten Flügeln (12 - 17), deren Enden den Hüllkreis (a₁) der Spitzen der Arbeitskanten (3 - 6) nicht berühren mit Flügeln (12 - 17), deren Enden beim Umlauf in den Hüllkreis (a₁) der Arbeitskanten (3 - 6) eingreifen (Fig. 5).

8. Pflückvorsatz nach einem oder mehreren der vorhergehenden Ansprüche, dadurch gekennzeichnet, daß beim Umlauf des Einzugsrotors (2) und der Gegenwalze (10) die Spitzen der Arbeitskanten ( 3 - 6) an den Innenseiten der Flügel (12 - 17) entlang gleiten (Fig. 5).

9. Pflückvorsatz nach einem oder mehreren der vorhergehenden Ansprüche, gekennzeichnet durch eine dem Hüllkreis (a₂) der Gegenwalze (10) etwa angepaßte untere Abdeckwanne (18).

10. Pflückvorsatz nach Anspruch 9, dadurch gekennzeichnet, daß die Abdeckwanne (18) die Zerkleinerungsmesser (8) trägt.

11. Pflückvorsatz nach Anspruch 9 oder 10, dadurch gekennzeichnet, daß die Abdeckwanne (18) ein Gegenmesser (19) für die Flügel (12 - 17) der Gegenwalze (10) trägt.

12. Pflückvorsatz (1) für ein Erntegerät zum Ernten von Körnerfrüchten, z. B. Mais od. dgl. mit einem je Pflanzenreihe vorgesehenen Einzugsrotor (2), der auf seinem Umfang mit Arbeitskanten (3, 4, 5, 6) ausgerüstet ist und der mit einer mit mit spitz zulaufenden Flügeln (12, 13, 14, 15, 16, 17) ausgerüsteten Gegenwalze (10) als Gegenhalter für den Einzugsrotor zusammenarbeitet, dadurch gekennzeichnet, daß die Enden wenigstens einiger Flügel (12, 13, 14, 15, 16, 17) und wenigstens einiger Arbeitskanten (3, 4, 5, 6) spitz zulaufend ausgebildet sind.

13. Pflückvorsatz nach Anspruch 12, dadurch gekennzeichnet, daß bei ihrem Umlauf die spitz zulaufend ausgebildeten Enden der Arbeitskanten (3 - 6) den spitz zulaufenden Enden der Flügel (12 - 17) gegenüberstehen und den zwischen ihnen befindlichen Halm quetschen und/oder einschneiden und/oder durchschneiden (Fig. 4).

14. Pflückvorsatz nach Anspruch 12 oder 13, gekennzeichnet durch die Kombination von spitz zulaufend ausgebildeten Flügeln (12 - 17), deren Enden den Hüllkreis (a₁) der Spitzen der Arbeitskanten (3 - 6) nicht berühren mit Flügeln (12 - 17), deren Enden beim Umlauf in den Hüllkreis (a₁) der Arbeitskanten (3 - 6) eingreifen (Fig. 5).

15. Pflückvorsatz wenigstens nach Anspruch 12, dadurch gekennzeichnet, daß beim Umlauf des Einzugsrotors (2) und der Gegenwalze (10) die Spitzen der Arbeitskanten (3 - 6) an den Innenseiten der Flügel (12 - 15) entlanggleiten (Fig. 5).

16. Pflückvorsatz nach einem oder mehreren der vorhergehenden Ansprüche 12 - 16, gekennzeichnet durch eine dem Hüllkreis (a₂) der Gegenwalze (10) etwa angepaßte untere Abdeckwanne (18).

17. Pflückvorsatz nach einem oder mehreren der vorhergehenden Ansprüche, dadurch gekennzeichnet, daß die Abdeckwanne (18) ein Gegenmesser (19) für die Flügel (12 - 17) der Gegenwalze (10) trägt.

18. Pflückvorsatz nach einem oder mehreren der vorhergehenden Ansprüche, dadurch gekennzeichnet, daß im vorderen Bereich des Einzugsrotors (2) und/oder der Gegenwalze (10) unterhalb des Schneckenganges ein Messer angeordnet ist, das die Pflanzenstengel relativ nahe am Boden abtrennt.

19. Pflückvorsatz nach Anspruch 18, dadurch gekennzeichnet, daß das Messer als umlaufend angetriebenes Scheibenzahnmesser ausgebildet ist.

20. Pflückvorsatz nach Anspruch 18, dadurch gekennzeichnet, daß das Messer als gewölbtes Schneidmesser ausgebildet ist, dessen Schneidkante in Fahrtrichtung ausgerichtet ist.

21. Pflückvorsatz nach Anspruch 20, dadurch gekennzeichnet, daß die Wölbung des Schneidmessers der Wölbung des Schneckenganges des Einzugsrotors (2) bzw. der Gegenwalze (10) angepaßt ist.

## Claims

1. Picking attachment (1) for a harvester for harvesting cereals, for example maize or the like, having for each row of plants a respective pull-in rotor (2) which on its circumference is equipped with working edges (3, 4, 5, 6) which have slits (7) in which comminuting cutters (8) carried by the machine engage, said rotor cooperating with a mating roller (10) which is equipped with blades (12, 13, 14, 15, 16, 17) and serves as back support for the pull-in rotor (2), characterized in that the comminuting cutters (8) cooperate exclusively with the slits (7) of the pull-in rotor (2).

2. Picking attachment according to Claim 1, characterized in that the region underneath the mating roller (10) is closed at the bottom.

3. Picking attachment according to Claim 1 or 2, characterized in that the comminuting cutters (8) are pivotally mounted (at 17*).

4. Picking attachment according to one or more of the preceding claims, characterized in that the blades (12 - 17) of the mating roller (10) are in the form of V-shaped and/or L-shaped and/or U-shaped bows.

5. Picking attachment according to one or more of the preceding claims, characterized in that the ends of at least some of the blades (12 - 17) and/or of at least some of the working edges (3 - 6) have pointed ends.

6. Picking attachment according to one or more of the preceding claims, characterized in that in their rotation the pointed ends of the working edges (3 - 6) are situated opposite the pointed ends of the blades (12 - 17) and crush and/or cut into and/or cut through the stalk situated between them (Figure 4).

7. Picking attachment according to one or more of the preceding claims, characterized by the combination of blades (12 - 17) having pointed ends, whose ends do not make contact with the enveloping circle (a₁) of the tips of the working edges (3 - 6), with blades (12 - 17) whose ends extend during the rotation into the enveloping circle (a₁) of the working edges (3 - 6) (Figure 5).

8. Picking attachment according to one or more of the preceding claims, characterized in that during the rotation of the pull-in rotor (2) and of the mating roller (10) the tips of the working edges (3 - 6) slide along the inner sides of the blades (12 - 17) (Figure 5).

9. Picking attachment according to one or more of the preceding claims, characterized by a bottom cover trough (18) approximately matching the enveloping circle (a₂) of the mating roller (10).

10. Picking attachment according to Claim 9, characterized in that the cover trough (18) carries the comminuting cutters (8).

11. Picking attachment according to Claim 9 or 10, characterized in that the cover trough (18) carries a mating cutter (19) for the blades (12 - 17) of the mating roller (10).

12. Picking attachment (1) for a harvester for harvesting cereals, for example maize or the like, having for each row of plants a respective pull-in rotor (2) which on its circumference is equipped with working edges (3, 4, 5, 6) and which cooperates with a mating roller (10) equipped with pointed blades (12, 13, 14, 15, 16, 17) and serving as back support for the pull-in rotor, characterized in that the ends of at least some of the blades (12, 13, 14, 15, 16, 17) and of at least some of the working edges (3, 4, 5, 6) have pointed ends.

13. Picking attachment according to Claim 12, characterized in that in their rotation the pointed ends of the working edges (3 - 6) are situated opposite the pointed ends of the blades (12 - 17) and crush and/or cut into and/or cut through the stalk situated between them (Figure 4).

14. Picking attachment according to Claim 12 or 13, characterized by the combination of blades (12 - 17) having pointed ends, whose ends do not make contact with the enveloping circle (a₁) of the tips of the working edges (3 - 6), with blades (12 - 17) whose ends extend during the rotation into the enveloping circle (a₁) of the working edges (3 - 6) (Figure 5).

15. Picking attachment at least according to Claim 12, characterized in that during the rotation of the pull-in rotor (2) and of the mating roller (10) the tips of the working edges (3 - 6) slide along the inner sides of the blades (12 - 17) (Figure 5).

16. Picking attachment according to one or more of the preceding Claims 12 to 16, characterized by a bottom cover trough (18) approximately matching the enveloping circle (a₂) of the mating roller (10).

17. Picking attachment according to one or more of the preceding claims, characterized in that the cover trough (18) carries a mating cutter (19) for the blades (12 -17) of the mating roller (10).

18. Picking attachment according to one or more of the preceding claims, characterized in that in the front region of the pull-in rotor (2) and/or of the mating roller (10) there is disposed underneath the spiral a cutter which severs the plant stems relatively close to the ground.

19. Picking attachment according to Claim 18, characterized in that the cutter is in the form of a rotationally driven disc toothed cutter.

20. Picking attachment according to Claim 18, characterized in that the cutter is in the form of a curved cutting knife whose cutting edge is directed in the direction of travel.

21. Picking attachment according to Claim 20, characterized in that the curvature of the cutting knife matches the curvature of the spiral of the pull-in rotor (2) or of the mating roller (10).

## Revendications

1. Appareil à cueillir (1) pour une moissonneuse pour la récolte de grains, par exemple du maïs ou analogue, comportant un rotor d'alimentation (2) prévu par rang de plantes, ce rotor étant équipé sur son pourtour d'arêtes de travail (3, 4, 5, 6) présentant des fentes (7), dans lesquelles s'engagent des lames de fragmentation (8) portées par la machine, et interagissant avec un contre-rouleau (10) équipé d'ailes (12, 13, 14, 15, 16, 17) et servant de contre-support pour le rotor d'alimentation (2), caractérisé en ce que les lames de fragmentation (8) interagissent exclusivement avec les fentes (7) du rotor d'alimentation (2).

2. Appareil à cueillir selon la revendication 1, caractérisé en ce que la zone située sous le contre-rouleau (10) est fermée vers le bas.

3. Appareil à cueillir selon la revendication 1 ou 2, caractérisé en ce que les lames de fragmentation (8) sont installées de façon mobile en (17).

4. Appareil à cueillir selon une ou plusieurs des revendications précédentes, caractérisé en ce que les ailes (12-17) du contre-rouleau (10) sont réalisées sous forme de pièces recourbées en V et/ou en L et/ou en U.

5. Appareil à cueillir selon une ou plusieurs des revendications précédentes, caractérisé en ce que les extrémités d'au moins quelques ailes (12-17) et/ou d'au moins quelques arêtes de travail (3-6) sont réalisées de façon affilée.

6. Appareil à cueillir selon une ou plusieurs des revendications précédentes, caractérisé en ce que lors de leur rotation, les extrémités affilées des arêtes de travail (3-6) font face aux arêtes affilées des ailes (12-17) et écrasent et/ou entaillent et/ou découpent le brin se trouvant entre elles (figure 4).

7. Appareil à cueillir selon une ou plusieurs des revendications précédentes, caractérisé par la combinaison d'ailes affilées (12-17) dont les extrémités ne touchent pas le cercle enveloppant (a₁) des bouts des arêtes de travail (3-6), avec des ailes (12-17) dont les extrémités, en rotation, s'engagent dans le cercle enveloppant (a₁) des arêtes de travail (3-6) (figure 5).

8. Appareil à cueillir selon une ou plusieurs des revendications précédentes, caractérisé en ce que lors de la rotation du rotor d'alimentation (2) et du contre-rouleau (10), les bouts des arêtes de travail (3-6) glissent le long des faces intérieures des ailes (12-17) (figure 5).

9. Appareil à cueillir selon une ou plusieurs des revendications précédentes, caractérisé par une cuve de protection inférieure (18) approximativement adaptée au cercle enveloppant (a₂) du contre-rouleau (10).

10. Appareil à cueillir selon la revendication 9, caractérisé en ce que la cuve de protection (18) porte la lame de fragmentation (8).

11. Appareil à cueillir selon la revendication 9 ou 10, caractérisé en ce que la cuve de protection (18) porte une contre-lame (19) pour les ailes (12-17) du contre-rouleau (10).

12. Appareil à cueillir (1) pour une moissonneuse pour la récolte de grains, par exemple du maïs ou analogue, comportant un rotor d'alimentation (2) prévu par rang de céréales, ce rotor étant équipé sur son pourtour d'arêtes de travail (3, 4, 5, 6) et interagissant avec un contre-rouleau (10) équipé d'ailes affilées (12, 13, 14, 15, 16, 17) et servant de contre-support pour le rotor d'alimentation, caractérisé en ce que les extrémités d'au moins quelques ailes (12, 13, 14, 15, 16, 17) et d'au moins quelques arêtes de travail (3, 4, 5, 6) sont réalisées de façon affilée.

13. Appareil à cueillir selon la revendication 12, caractérisé en ce que lors de leur rotation, les extrémités affilées des arêtes de travail (3-6) font face aux extrémités affilées des ailes (12-17) et écrasent et/ou entaillent et/ou découpent le brin se trouvant entre elles (figure 4).

14. Appareil à cueillir selon la revendication 12 ou 13, caractérisé par la combinaison d'ailes affilées (12-17) dont les extrémités ne touchent pas le cercle enveloppant (a₁) des bouts des arêtes de travail (3-6), avec des ailes (12-17) dont les extrémités, en rotation, s'engagent dans le cercle enveloppant (a₁) des arêtes de travail (3-6) (figure 5).

15. Appareil à cueillir selon au moins la revendication 12, caractérisé en ce que lors de la rotation du rotor d'alimentation (2) et du contre-rouleau (10), les bouts des arêtes de travail (3-6) glissent le long des faces intérieures des ailes (12-15) (figure 5).

16. Appareil à cueillir selon une ou plusieurs des revendications précédentes 12-16, caractérisé par une cuve de protection inférieure (18) approximativement adaptée au cercle enveloppant (a₂) du contre-rouleau (10).

17. Appareil à cueillir selon une ou plusieurs des revendications précédentes, caractérisé en ce que la cuve de protection(18) porte une contre-lame (19) pour les ailes (12-17) du contre-rouleau (10).

18. Appareil à cueillir selon une ou plusieurs des revendications précédentes, caractérisé en ce que dans la zone avant du rotor d'alimentation (2) et/ou du contre-rouleau (10) sous la spire est disposée une lame qui sectionne les tiges des plantes relativement près du sol.

19. Appareil à cueillir selon la revendication 18, caractérisé en ce que la lame est réalisée sous la forme d'un disque-couteau à dents.

20. Appareil à cueillir selon la revendication 18, caractérisé en ce que la lame est réalisée sous la forme d'une lame cintrée dont le tranchant est disposé suivant la direction d'avancement.

21. Appareil à cueillir selon la revendication 20, caractérisé en ce que la courbure de la lame est adaptée à la courbure de la spire du rotor d'alimentation (2) ou du contre-rouleau (10).
